# EUROPEAN PATENT APPLICATION

(11) **EP 1 557 297 A1**
(43) Date of publication of application: **27.07.2005**
(21) Application number: 04001040.7
(22) Date of filing: 20.01.2004
(51) Int. Cl.: B60C 27/04

(54) **Portable anti-skid device for tires of motor vehicles**

(71) Applicant: Cavaletto, Silvio, 10086 Rivarolo Canavese (Torino) (IT)
(72) Inventor: Cavaletto, Silvio, 10086 Rivarolo Canavese (Torino) (IT)
(74) Representative: Aprà, Mario

(57) **Abstract**

The device according to the invention comprises a support body (11), in which a toothed pinion (12) is mounted able to rotate and in which a plurality of sliding crampons (14), essentially "L" shaped, are supported. Each crampon has a first branch (14.1) able to slide in a respective plane, substantially orthogonal to the axis of said pinion (12) and a second branch (14.2, 24.2), essentially orthogonal to the corresponding first branch. Each of said first branches of the crampons has a respective rack enmeshed with said pinion, so that when said pinion (12) is made to rotate in one or in the other sense, said first branches (14.1, 24.1) of the crampons (14, 24) are simultaneously driven to slide, in the respective guides (14.3, 24.3), arranging the crampons themselves alternatively either in the retracted position of minimum bulk, to take the device (10) out of service, or in extended working position, in which the device itself is mounted relative to a wheel provided with tyre (P).

## Description

The present invention relates to a portable anti-sliding device for wheels of motor vehicles travelling over snow-covered or ice-covered roads.

Devices of the type specified above are known. Widely used to provide grip on the snow and/or ice covered road surface are, for instance, the so-called "snow chains". Other similar devices have also been proposed for the same purpose.

However, all known devices of the specified type are not ready for use, in case of need, because they must first of all be readied for use, and/or they do not allow for easy and fast installation, without moving the vehicle, and/or they are not conveniently transported with reduced bulk on a motor vehicle. Moreover, known devices vary dimensionally according to the type of motor vehicle whereon they are to be installed.

Starting from the notion of said drawbacks, the present invention aims to overcome them.

Therefore, a main object of the present invention is to provide a portable anti-sliding device for wheels of motor vehicles travelling over snow-covered or ice-covered roads, which, when needed, can be installed in an immediate and simple fashion on each selected wheel of a motor vehicle, without any effort or difficulty for the installer, and which an be stored and transported when not in service with minimal dimensions.

Another object of the invention is to provide a portable anti-sliding device of the type indicated which can be universally applied, in one version, for the category of medium-light vehicles (cars, vans and the like) and, in another version, for the category of heavy motor vehicles (lorries, tractor-trailers, and the like).

Another object of the invention is to provide a portable anti-sliding device of the specified type, which has a simplified structure, safe and reliable operation, and relatively low cost.

In view of these objects, the present invention provides a portable anti-sliding device for wheels of motor vehicles travelling over snow-covered or ice-covered roads, whose essential characteristic is set out in the main claim.

Additional advantageous characteristics are set out in the dependent claims.

The aforesaid claims are understood to be integrally set out herein.

The present invention shall become more readily apparent from the detailed description that follows, with reference to the accompanying drawings, provided purely by way of non limiting example, in which:
- Fig. 1 is an elevation view of a first embodiment of the device according to the invention, in the version for medium-light vehicles and with retracted crampons.
- Fig. 2 is a sectioned view according to the line II-II of Fig. 1;
- Fig. 3 is a detailed view in the direction of the arrow III of Fig. 2;
- Fig. 4 is a sectioned view according to the line IV-IV of Fig. 1, but with the crampons extended;
- Fig. 5 is an elevation view of the is an elevation view of a second embodiment of the device according to the invention in the version for heavy vehicles;
- Fig. 6 is a section view according to the line VI-VI of Fig. 5;
- Fig.7 is a detailed view in the direction of the arrow VII of Fig. 6;
- Fig.8 is a section view according to the line VIII-VIII of Fig. 5.

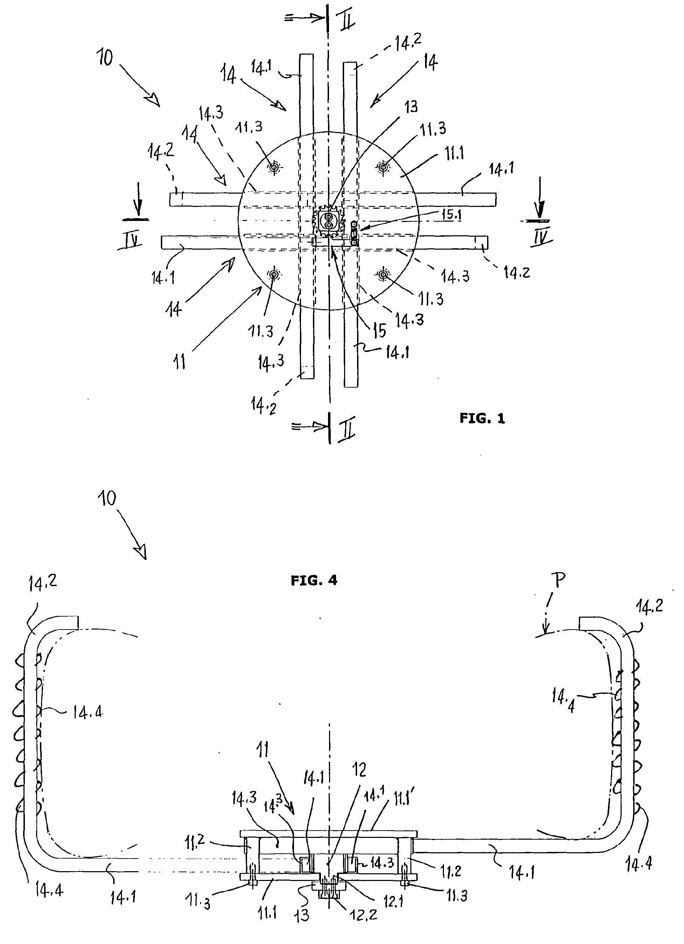

First exemplifying embodiment (Figures 1 through 4): version of the device to be applied on wheels of medium-light vehicles.

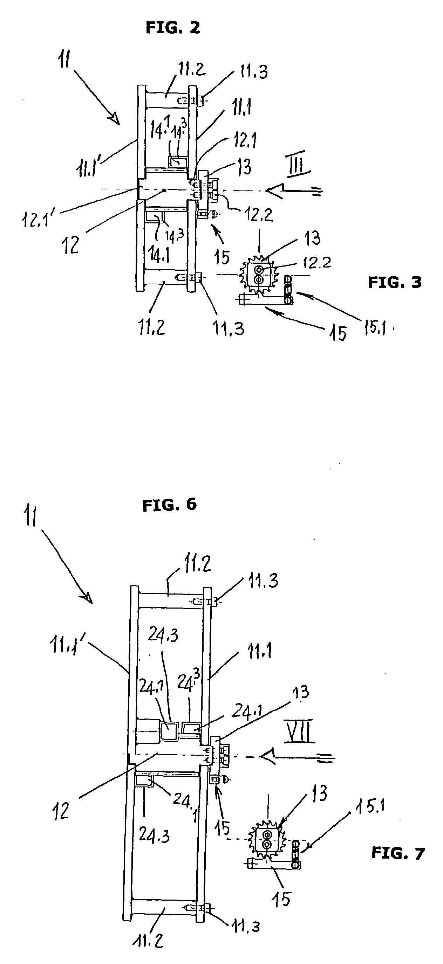

The reference number 10 (Figs. 1 and 2) globally designate the portable anti-sliding device for wheels of motor vehicles travelling over snow-covered or ice-covered roads, according to the present embodiment of the device, whilst the dashed line P in Fig. 2 schematically outlines the outer profile of a tyre for a motor vehicle wheel, whereon the device 10 is installed.

Said portable anti-sliding device 10 essentially comprises a drum shaped support body 11, constituted by two support disks 11.1, 11.1', identical and rigidly connected to each other, coaxial and positioned in substantially parallel planes, by means of four column spacers 11.2. Each spacer 11.2 is fastened (for example welded), at one end, with its axis orthogonal relative to the inner face of the disc 11.1' (hereinafter called rear disc), whilst at the other end it has a threaded axial whole, in which is engaged by screwing the shank of a corresponding screw 11.3, passing through a respective hole drilled in the disc 11.1 (hereinafter called front disc), whilst the head of the screw abuts against the outer face of said front disc 11.1. Each spacer 11.2 occupies an area proximate to the outer periphery of the discs 11.1, 11.1' in a respective quadrant.

A toothed pinion 12 is mounted coaxial and rotating between said support discs 11.1, 11.1'. For this purpose, the discs 11.1, 11.1' have respective axial holes, in which are housed for rotation the corresponding axial ends 12.1, 12.1', cylindrical and without teeth, of the pinion 12, i.e. the end 12.1 (hereinafter called front end) and the end 12.1' (hereinafter called rear end). Bearing means, known in themselves and thus not illustrated herein, may be interposed between said parts. It should be noted that the front end 12.1 of the pinion 12 extends beyond the front face of the corresponding support disk 11.1 and on said front end is fastened, by means of a pair of screws 12.2, a coaxial retaining bushing 13, also toothed.

Moreover, in said bushing 13 or in the pinion 12 is drilled a square hole, open at the side of said front end 12.1 of the pinion, for the removable engagement of a corresponding operating wrench (not shown herein).

In said drum shaped body 11 are supported four sliding crampons or spokes 14 (Fig. 1), essentially "L" shaped, i.e. having each a first branch 14.1 that is linear and able to slide in a respective plane, orthogonal to the axis of said pinion 12, and a second linear branch 14.2 (Fig. 2), essentially orthogonal to the corresponding first branch 14.1 and extended from an end thereof beyond the rear face of the rear disk 11.1' for a depth at least equal to the thickness of the tyre P. Said first branch 14.1 of each crampon 14 is positioned in sliding fashion within a corresponding tubular guide 14.3, fastened to one of the disks 11.1, 11.1'. Specifically, considering two planes which are axial relative to the pinion 12 and mutually orthogonal (Fig. 1), a pair of tubular guides 14.3 is fastened in specularly symmetrical arrangement relative to one of said planes, on the inner face of the front disc 11.1 (Fig. 2), whilst the other two guides 14.3 are respectively fastened on the inner face of the two discs 11.1, 11.1' (fig. 3) in symmetrical arrangement relative to the other one of said axial planes. Two pairs of crampons 14 are thus provided and in each of said pairs the first branches 14.1 of the crampons are essentially parallel to each other. It will be noted that, in each of said pairs of crampons 14, the second branches 14.2 of the crampons are positioned at the opposite ends of the respective first branches 14.1 parallel to each other. Moreover, each of said first linear branches 14.1 of the crampons 14 has a respective integral rack (not shown in the drawings), extending over a substantial part of the branch, enmeshed with said pinion 12.

By this arrangement, making said pinion 12 rotate in a given direction, said first rectilinear branches 14.1 of the crampons 14 are simultaneously driven to slide, within the respective guides 14.3, in twos, along the same direction but in mutually opposite senses, the two directions of sliding being essentially orthogonal to each other. In particular, with reference to Fig. 1, a counter-clockwise rotation of the pinion 12 causes, in each pair of crampons 14 with the first branches 14.1 essentially parallel, the movement of the corresponding second branches 14.2 away from each other, and vice versa.

Installation of the device 10:
the relative arrangement of the crampons 14 shown in Fig. 1 corresponds to their retracted condition of minimum bulk (out of service condition of the device 10 for its convenient transportation, for example, in the baggage compartment of a car).

Starting from this condition of the device 10 and acting by means of an appropriate operating wrench engaged in said square hole of the pinion 12, by the counter-clockwise rotation of the pinion itself co-operating with said racks of the first branches 14.1 of the crampons 14, the crampons 14 are made to translate relative to the respective guides 14.3, so that the pairs of the first rectilinear branches 14.1, mutually parallel, extend substantially for a length exceeding the outer diameter of the tyre P. When this position is reached, the device 10 is presented relative to the wheel with the tyre P with the rear support disc 11.1' juxtaposed to the wheel itself, from the exterior of the motor vehicle, in such a way as to place on the tread of the tyre P said second branches 14.2 of the crampons 14, placing the axis of the pinion 12 substantially parallel to the axis of the wheel. It should be noted that said second branches 14.2 of the crampons 14 are positioned at approximately 90° from each other along the surface of the tread of the tyre P. Then, with reverse (i.e. clockwise) rotation of said pinion 12, said first branches 14.1 of the crampons 14 are retracted in the respective guides 14.3 until "fitting" to measure said second branches 14.2 of the crampons 14 against the tread of the tyre P. The operating wrench is extracted from the square hole. Said operative arrangement of the device 10 on the tyre P is stably secured by means of a retaining pawl 15 (Fig. 3) engaged with said toothed bushing 13 by one-directional meshing, i.e. only in the counter-clockwise direction of rotation, by way of arresting catch preventing the retrograde rotation of the pinion 12 in the counter-clockwise direction. Said pawl 15 is articulated, at one end, relative to the support disc 11.1, by means of a fixed pivot with orthogonal axis relative to the outer face of the disc itself, and a return spring 15.1 acting on the other end assures its constant and correct working position. In this regard, it should be noted that during the travel over roads of the wheel with tyre P, under load, said first branches 14.1 of the crampons 14 tend to move backwards relative to the corresponding guides 14.3, making the corresponding racks correspondingly move backwards relative to the pinion 12, which is not prevented by the pawl 15 from consequently rotating in retrograde clockwise direction, so that said second branches 14.2 of the crampons 14 are induced to close even more tightly on the tread of the tyre P, without ever loosening by the action of the centrifugal force which also acts thereon, and this thanks to said pawl 15, which instead oppose the counter-clockwise retrograde rotation of the pinion 12, with which said racks of the crampons 14 are enmeshed. In this condition, the crampons 14 closely adhere onto the tread of the tyre P with their second branches 14.2 and allow during the rotation of the corresponding wheel to crack the compact layer of ice and/or snow, thereby achieving a grip on the road travelled by the motor vehicle.

To enhance this effect, said second branches 14.2 of the crampons 14 have flattened shape and, as shown in Fig. 2, are provided with projections 14.4, both on the face oriented towards the road surface and on the one oriented towards the tyre P.

Obviously, at least two devices 10 will be installed on at least a respective pair of wheels of the motor vehicles positioned on the same axle (obviously, at least the driving wheels).

To remove the device 10, the pawl 15 is manually disengaged from the pinion 12, against the elastic force of the spring 15.1. It is then made to rotate, by means of the appropriate wrench engaged in said square hole, said pinion 12 in the counter-clockwise direction (Fig. 1), in order to extend said first branches 14.1 of the crampons 14 substantially beyond the maximum diameter of the tyre P, thereby loosening the grip of the second branches 14.2 of the crampons on the tread of the tyre. The device 10 is then removed from the wheel provided with the tyre P and, making the pinion 12 rotate clockwise by means of said wrench, the crampons 14 are brought back to the minimal size condition shown in Figure 1. The device 10 is then stored.

Second embodiment (Figures 5 through 8): version of the device to be applied to wheels of heavy motor vehicles.

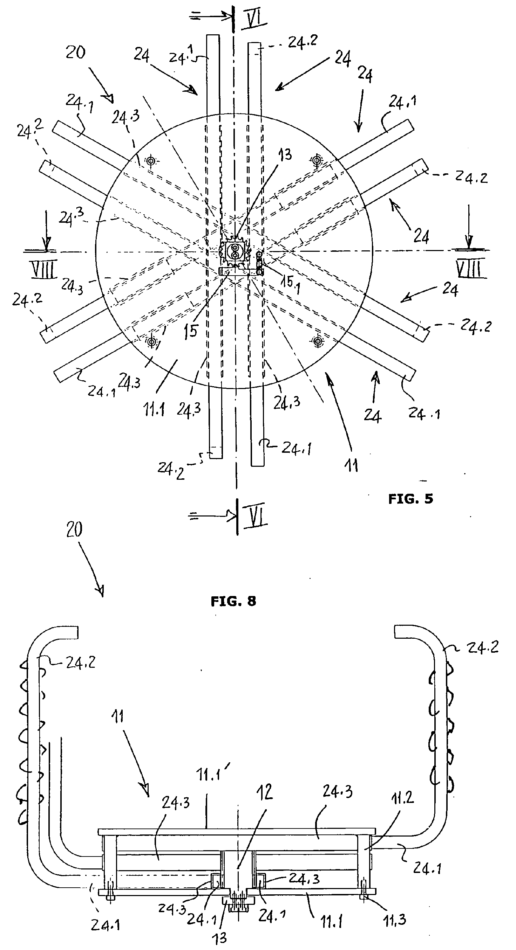

The device according to the invention is globally designated by the reference number 20 (Figs. 5, 8). It substantially corresponds to the device 10 illustrated above, with the sole difference that it is provided with six crampons, designated herein as 24, instead of four. The similar parts of the devices 10 and 20 are designated by the same reference numbers.

Each of said six sliding crampons or spokes 24 is essentially "L" shaped, i.e. having each a first branch 24.1 that is linear and able to slide in a respective plane, orthogonal to the axis of said pinion 12, and a second linear branch 24.2, essentially orthogonal to the corresponding first branch 24.1 and extended from an end thereof beyond the rear face of the rear disk 11.1' of the support body 11, for a depth at least equal to the thickness of the tyre whereon the device 20 is to be mounted. Said first branch 24.1 of each crampon 24 is positioned in sliding fashion within a corresponding tubular guide 24.3, fastened to one of the disks 11.1, 11.1'. Specifically, considering three planes, axial relative to the pinion 12 and mutually offset in twos by 120° (Fig. 5), said guides 24.3 are arranged in pairs respectively in specularly symmetrical arrangement relative to said planes. Three pairs of crampons 24 are thereby provided and in each of said pairs the first branches 24.1 of the crampons are essentially parallel to each other. It will be noted that, in each of said pairs of crampons 24, the second branches 24.2 of the crampons are positioned at the opposite ends of the respective mutually parallel first branches 24.1. Moreover, each of said first linear branches 24.1 of the crampons 24 has a respective integral rack, linear and extended over a substantial part of the branch itself, and enmeshed with said pinion 12.

By said arrangement, the interval between adjacent crampons 24 is reduced, which, during the travel of the vehicle which mounts at least a pair of devices 20 on two wheels on the same axle, enables a more fluid motion.

For all other matters, the description of the device according to the invention, provided with reference to the first embodiment, applies as well.

The device 10, 20 can be made of high strength plastic polymer for automotive use. To withstand particularly sizeable stresses, the drum shaped support 11 of the device can be made of aluminium alloy or steel, whilst the crampons can be made of steel or of a high strength plastic polymer.

### Some variants

The retaining pawl can be replaced by other retaining means.

The crampons, shown with substantially square cross section, can have a flat shape.

The second branch (14.2, 24.2) of the crampons can be extensible and retractile, to be adapted to tyres of different width. In this case, said branch is formed, for instance, by mutually connecting two holed strap elements, provided with series of holes or with slotted holes, by means of fastening bolt, serving in operation also as a grip means in the manner of a projection.

## Claims

1. A portable anti-sliding device for wheels of motor vehicles travelling over snow-covered or ice-covered roads, **characterised in that** it comprises a support body (11), in which a toothed pinion (12) is mounted able to rotate by manual actuation by means of an operating wrench, and in which are supported a plurality of sliding crampons or spokes (14, 24), essentially "L" shaped, i.e. having each a first branch (14.1, 24.1) able to slide in a respective plane, substantially perpendicular to the axis of said pinion (12) and a second branch (14.2, 24.2), essentially orthogonal to the corresponding first branch and extended from one end thereof beyond said support body (11) for a depth that substantially corresponds to the thickness of a tyre (P), said first branch (14.1, 24.1) of each crampon (14) being able to slide relative to a corresponding guide (14.3, 24.3), fastened to said support body (11), and **in that** each of said first branches of the crampons has a respective rack enmeshed with said pinion, so that making said pinion (12) rotate in one or in the other direction, said first branches (14.1, 24.1) of the crampons (14, 24) are driven simultaneously to slide, in the respective guides (14.3, 24.3), arranging said crampons alternatively either in retracted position of minimum bulk, to take the device out of service (10, 20), or in extended working position, in which the device is presented relative to the wheel fitted with tyre (P) with the support body (11) juxtaposed to the wheel itself, from the exterior of the motor vehicle, in such a way as to place on the tread of the tyre (P) said second branches (14.2, 24.2) of said crampons, with the axis of the pinion (12) substantially parallel to the axis of the wheel, and then, by inverse rotation of said pinion, said first branches (14.1, 24.1) of the crampons are retracted in the respective guides (14.3, 24.3) until said second branches (14.2, 24.2) fit to measure against the tread of the tyre (P), the device (10) thereby being mounted in work position on the wheel with tyre (P).

2. A device as claimed in claim 1, **characterised in that** it comprises four crampons or spokes (14) and **in that**, considering two planes which are axial relative to said pinion (12) and mutually orthogonal (Fig. 1), a pair of guides (14.3) is fastened to said support body (11) in substantially symmetrical arrangement relative to one of said planes, whilst two other guides (14.3) are fastened in substantially symmetrical arrangement relative to the other of said axial planes, so that two pairs of crampons (14) are provided and in each of said pairs the first branches (14.1) of the crampons themselves are essentially parallel to each other, whilst in each of said pairs of crampons (14) the second branches (14.2) of the crampons are positioned at the opposite ends of the respective mutually parallel first branches (14.1), and so that when said pinion (12) is made to rotate in one or in the other direction, said first branches (14.1) of the crampons (14) are driven simultaneously to slide, in the respective guides (14.3), in twos, in the same direction but in mutually opposite senses, making said second branches (14.2) move closer to or farther away from each other.

3. A device as claimed in claim 1, **characterised in that** it comprises six crampons or spokes (24) and **in that**, considering three planes which are axial relative to said pinion (12) and mutually offset in twos substantially by 120° (Fig. 5), said guides (24.3) are arranged in pairs respectively in substantially symmetrical disposition relative to said planes, so that three pairs of crampons (24) are provided and in each of said pairs the first branches (24.1) of the crampons are essentially parallel to each other, whilst in each of said pairs of crampons (24), the second branches (24.2) of the crampons are positioned at the opposite ends of the respective mutually parallel first branches (24.1), and so that when said pinion (12) is made to rotate in one or in the other sense, the first branches (24.1) of the crampons (24) are simultaneously driven to slide, in the respective guides (24.3), in twos, in the same direction but in mutually opposite senses, making said second branches (24.2) move closer to or farther away from each other.

4. A device as claimed in claim 1, **characterised in that** it comprises a retaining member (15), engaged, directly or through another member (13), relative to said pinion (12) by one-directional meshing, i.e. only in a sense of rotation, in the form of a ratchet effects which prevents the retrograde rotation of the pinion (12) and opposes the centrifugal force which, during the travel of the wheel with tyre (P) whereon the device is mounted, acts on said crampons (14, 24) and it tends to move their second branches (14.2, 24.2) away from the tread of the tyre (P).

5. A device as claimed in any or more of the previous claims, **characterised in that** said support body (11) comprises two support discs (11.1, 11.1'), mutually connected, coaxial and positioned in substantially parallel planes.

6. A device as claimed in any or more of the previous claims, **characterised in that** said second branch (14.2, 24.2) of the crampons (14, 24) is extensible and retractile, to be adapted to tyres of different width.

7. A device as claimed in any or more of the previous claims, **characterised in that** said second branches (14.2) of the crampons (14) are provided with projections (14.4), both on the face oriented towards the road surface and on the face oriented towards the tyre (P).
